# EUROPEAN PATENT APPLICATION

(11) **EP 4 484 509 A1**
(43) Date of publication of application: **01.01.2025**
(21) Application number: 22922675.8
(22) Date of filing: 26.01.2022
(51) Int. Cl.: C09D 175/04, C09J 175/04, C08L 75/04

(54) **APPLICATION OF TUNG OIL IN POLYURETHANE COMPOSITION**

(71) Applicant: Sika Technology AG, 6340 Baar (CH)
(72) Inventor: NAKAYAMA, Toshiaki, Tokyo 107-0051 (JP); SONG, Zhiyong, Suzhou, Jiangsu 215121 (CN)
(74) Representative: Sika Patent Attorneys
(86) International application number: PCT/CN2022/074077
(87) International publication number: WO 2023/141825

(57) **Abstract**

The present invention relates to a polyurethane composition, comprising at least one polyurethane prepolymer containing an isocyanate group, tung oil at the rate of 0.7 - 2.5 wt% of the total weight of the composition, and carbon black.

The invention also relates to a method for improving the chalking resistance of a polyurethane composition coating layer, especially with a high carbon black content, the method comprising adding tung oil to a polyurethane composition containing at least one polyurethane prepolymer containing an isocyanate group, before curing, at the rate of 0.7 - 2.5 wt% of the total weight of the polyurethane composition.

## Description

### Field of the invention

The present invention relates to the application of tung oil in a polyurethane composition, in particular for the purpose of improving the chalking resistance of a polyurethane coating layer (in particular when the carbon black content is high), and further relates to a polyurethane composition containing tung oil.

### Background of the invention

Curable polyurethane compositions crosslinked by a reaction of isocyanate groups with hydroxyl groups and/or moisture or water are used in many industrial applications, for example as adhesives, sealants or coatings in the construction and manufacturing industries.

However, when these polyurethane materials are used, for example applied to roofs and wall surfaces, the surface of the cured polyurethane material layer will often experience deterioration, e.g. chalking and cracking, as the duration of exposure to the environment increases.

It is known in the prior art that chalking resistance can be improved by adding specific pigments, such as carbon black or titanium dioxide, etc. However, an excessive amount of added pigment, especially carbon black, will result in chalking and staining, making it impossible to achieve an ideal appearance, and may also cause a drop in mechanical performance, material aging and cracking, and other negative consequences.

### Summary of the Invention

Thus, an objective of the present invention is to find a method capable of further improving the chalking resistance of a polyurethane coating layer; it is hoped that such a method will not result in unacceptable carbon black staining, especially when a large amount of carbon black is added, for example an amount of carbon black exceeding 9 wt% or 15 wt% of the polyurethane composition. In addition, of similar importance is the need to simultaneously take into account the curing properties of the polyurethane composition, such that the curing behaviour of the polyurethane composition and its mechanical performance after curing will not suffer adverse effects, or at most will experience only a slight drop, without affecting the use of the polyurethane composition.

Surprisingly, the inventors of the present application have already discovered that the abovementioned objective can be achieved by means of a polyurethane composition as defined in claim 1, containing tung oil at the rate of 0.7 - 2.5 wt%, preferably 0.8 - 2.0 wt% of the total weight of the polyurethane composition. In particular, such a polyurethane composition can allow the carbon black addition amount to be increased to a level exceeding 15 wt% without any significant chalking.

Furthermore, as shown in the Examples, the curing behaviour and mechanical performance of the polyurethane composition will not be unfavourably impaired.

Another aspect of the present invention is the subject of the other independent claim. Especially preferred embodiments of the present invention are the subject of the dependent claims.

### Detailed Description of the Invention

A first aspect of the present invention provides a polyurethane composition, comprising:
- at least one polyurethane prepolymer containing an isocyanate group;
- tung oil at the rate of 0.7 - 2.5 wt% of the total weight of the polyurethane composition; and
- carbon black.

In addition, a second aspect of the present invention provides a method for improving the resistance of a polyurethane composition coating layer to chalking and/or carbon black staining, the method comprising adding tung oil to the polyurethane composition, before curing, at the rate of 0.7 - 2.5 wt% of the total weight of the polyurethane composition.

The term "molecular weight" means the molar mass (in g/mol) of a molecule or molecular residue. The term "average molecular weight" means the number average molecular weight (Mn) of a polydisperse mixture of oligomer or polymer molecules or molecular residues. This is generally determined by gel permeation chromatography (GPC) with polystyrene as a standard.

The term "aromatic isocyanate" means an isocyanate whose isocyanate group is directly linked to an aromatic carbon atom. Correspondingly, such an isocyanate group is called an "aromatic isocyanate group".

The term "aliphatic isocyanate" means an isocyanate whose isocyanate group is directly connected to an aliphatic carbon atom. Correspondingly, such an isocyanate group is called an "aliphatic isocyanate group".

A substance name beginning with "poly", such as polyamine, polyol or polyisocyanate, means a substance in which each molecule formally contains two or more of the functional group appearing in its name.

The term "room temperature" means a temperature of 23°C.

The term "plasticizer" means a liquid or dissolved substance which is not chemically linked to a cured polymer and which generally has a plasticizing effect on the polymer.

In the present invention, the tung oil is itself a known drying oil. Drying oils are oils that dry under the action of oxygen when exposed to air, forming a pliable and tough solid film that is highly elastic. The main components of drying oils are glycerides of unsaturated fatty acids such as linolenic acid and linoleic acid; drying oils generally have iodine values of 130 or higher, and include natural drying oils and modified drying oils. So-called natural drying oils include, for example, tung oil, Chinese tallow tree seed oil, linseed oil, walnut oil, dehydrated castor oil, etc., while modified drying oils include, for example, maleic acid modified oils, ethylene modified oils, polymerized oils and oxidized oils, etc. Natural drying oils are mainly extracted from plants in the Euphorbiaceae family; their preparation and extraction processes are widely known, and there are already many commercially available products. Furthermore, it is known in the prior art that drying oils can be added to certain coating compositions such as sealants, in order to reduce surface tackiness, improve UV resistance, and improve adhesion between the sealant and the top coat, etc.

However, the inventors of the present application unexpectedly discovered that in a polyurethane coating composition, tung oil can give rise to highly superior resistance to chalking and carbon black staining in comparison with other drying oils such as linseed oil, etc., especially when added to an isocyanate-group-containing polyurethane prepolymer at the claimed rate of 0.7 - 2.5 wt%, preferably 0.8 - 2.0 wt% of the total weight of the polyurethane composition before curing. When added in a specific amount, tung oil is itself able to produce an adequate anti-chalking effect when the carbon black content is very low, e.g. lower than 4 or 5 wt%, and is also capable of very good performance in terms of preventing carbon black staining when the carbon black content is very high (e.g. as high as 15 wt% or more). Thus, there is no need to worry about the problem of chalking or staining caused by increasing the carbon black content to improve mechanical performance, and at the same time it is also possible, in certain formulas, to achieve the effect of significantly reducing surface gloss to obtain a highly matte surface. In addition, with the aid of tung oil added in a specific amount, the curing and mechanical performance of the polyurethane composition will not be significantly weakened.

Here, the amount of tung oil added is important. If the amount added is too much, it might adversely affect the mechanical performance of the polyurethane coating layer; if the amount added is insufficient, it will not achieve a significant effect in terms of improving chalking resistance, especially when the carbon black content is high. Preferred tung oil addition amounts are 0.8 - 2.1 wt% or 0.9 - 2.0 wt% of the total weight of the polyurethane composition.

In an advantageous embodiment of the present application, the polyurethane composition only comprises a specific amount of tung oil as a drying oil, and comprises an extremely small amount (e.g. less than 0.1 wt%, 0.05 wt%, 0.01 wt% or even 0.005 wt%) of, or preferably does not comprise, another drying oil such as linseed oil, etc.

The polyurethane composition according to the present application may advantageously comprise a high content of carbon black to maintain good mechanical performance and enhance the anti-chalking effect, without the problem of carbon black staining. Preferably, carbon black may be comprised in the composition at the rate of 10 wt% or more, e.g. 15 wt% or more or 20 wt% or more, of the total weight of the polyurethane composition.

Within the scope of the present application, a suitable polyurethane prepolymer containing an isocyanate group is in particular obtained by a reaction of at least one polyol with a hyperstoichiometric amount of at least one polyisocyanate. The reaction is preferably carried out at a temperature of 50 - 160°C in moisture-free conditions, and optionally in the presence of a suitable catalyst. The NCO/OH ratio is preferably in the range of 1.3/1 to 5/1, preferably 1.5/1 to 4/1, in particular 1.8/1 to 3/1. Polyisocynate remaining in the reaction mixture after conversion of the OH group, especially monomeric diisocyanate, can be removed, in particular by distillation, and this is preferred when the NCO/OH ratio is high. Preferably, the content of free isocyanate groups in the polyurethane prepolymer obtained is 1 - 10 wt%, in particular 1.5 -6 wt%. A plasticizer or solvent may optionally be used concurrently to prepare the polyurethane prepolymer, in which case the concurrently used plasticizer or solvent does not comprise any group that is reactive with isocyanate.

The polyisocyanate used to prepare the polyurethane prepolymer containing an isocyanate group is in particular a commercially available polyisocyanate, such as:
- aromatic di- or triisocyanates, preferably 4,4'- or 2,4'- or 2,2'-diphenylmethane diisocyanate or any mixture of these isomers (MDI), 2,4- or 2,6-toluene diisocynate or any mixture of these isomers (TDI), mixtures of MDI and MDI homologues (polymeric MDI or PMDI), 1,3- or 1,4-benzene diisocynate, 2,3,5,6-tetramethyl-1,4-diisocyanatobenzene, naphthalene-1,5-diisocyanate (NDI), 3,3'-dimethyl-4,4'-diisocyanatobiphenyl (TODI), dianisidine diisocynate (DADI), tri(4-isocyanatophenyl)methane or tri(4-isocyanatophenyl)thiophosphate; preferably MDI or TDI;
- aliphatic, cycloaliphatic or arylaliphatic di- or triisocyanates, preferably 1,4-tetramethylene diisocyanate, 2-methylpentamethylene-1,5-diisocyanate, 1,6-hexamethylene diisocyanate (HDI), 2,2,4- and/or 2,4,4-trimethyl-1,6-hexamethylene diisocyanate (TMDI), 1,10- decamethylene diisocyanate, 1,12-dodecamethylene diisocyanate, lysine diisocyanate or lysine ester diisocyanate, cyclohexane-1,3- or -1,4-diisocyanate, 1-methyl-2,4- and/or -2,6-diisocyanatocyclohexane (H₆ TDI), 1-isocyanato-3,3,5-trimethyl-5-isocyanato methylcyclohexane (IPDI), perhydro 2,4'-and/or 4,4'-biphenylmethane diisocyanate (H₁₂ MDI), 1,3- or 1,4-bis(isocyanatomethyl)cyclohexane, m- or p-xylylene diisocyanate, tetramethyl-1,3- or 1,4-xylylene diisocyanate, 1,3,5-tris(isocyanatomethyl)benzene, bis(1-isocyanato-1-methylethyl)naphthalene, dimeric or trimeric fatty acid isocyanates such as, in particular, 3,6-bis(9-isocyanatononyl)-4,5-bis(1-heptenyl)cyclohexene(dimeric diisocyanate); preferably H₁₂ MDI or HDI or IPDI;
- oligomers or derivatives of the di- or triisocyanates mentioned, in particular derived from HDI, IPDI, MDI or TDI, in particular oligomers containing ureadione or isocyanurate or iminooxadiazinedione groups or various groups thereof; or bi- or polyvalent derivatives comprising ester or urea or carbamate or biuret or allophanate or carbodiimide or uretonimine or oxadiazintrione group or various groups thereof. In practice, polyisocyanates of this type are generally mixtures of substances having different low degrees of polymerization and/or chemical structures. In particular, they have an average NCO functionality of 2.1 - 4.0.

Preferred polyisocyanates are aliphatic, cycloaliphatic or aromatic diisocyanates, in particular HDI, TMDI, cyclohexane-1,3- or-1,4-diisocyanate, IPDI, H₁₂ MDI, 1,3- or 1,4-bis(isocyanatomethyl)cyclohexane, XDI, TDI, MDI, 1,3- or 1,4-benzene diisocyanate or naphthalene-1,5-diisocyanate (NDI).

Especially preferred polyisocyanates are HDI, IPDI, H₁₂ MDI, TDI, MDI, or forms of MDI that are liquid at room temperature, in particular HDI, IPDI, TDI or MDI.

The form of MDI that is liquid at room temperature is either 4,4'-MDI liquefied by partial chemical modification (in particular, using a polyol for carbodiimidation or to form uretonimine or form an adduct), or a mixture of 4,4'-MDI with another MDI isomer (2,4'-MDI and/or 2,2'-MDI) and/or MDI oligomer and/or MDI homologue (PMDI), specially produced by blending or resulting from a preparation process.

Most preferred is IPDI, TDI or MDI.

Suitable polyols used to prepare the polyurethane prepolymer containing an isocyanate group are polyols that are commonly used commercially or mixtures thereof, in particular:
- polyether polyols, in particular polyoxyalkylene diols and/or polyoxyalkylene triols, in particular polymerization products of ethylene oxide or 1,2-propylene oxide or 1,2- or 2,3-butylene oxide or oxetane or tetrahydrofuran or mixtures thereof, wherein these may be polymerized with the aid of an initiator molecule having two or more active hydrogen atoms, the initiator molecule in particular being for example water, ammonia or a compound having multiple OH or NH groups, e.g. 1,2-ethanediol, 1,2- or 1,3-propanediol, neopentyl glycol, diethylene glycol, triethylene glycol, isomeric dipropylene glycol or tripropylene glycol, isomeric butanediol, pentanediol, hexanediol, heptanediol, octanediol, nonanediol, decanediol, undecanediol, 1,3- or 1,4-cyclohexane dimethanol, bisphenol A, hydrogenated bisphenol A, 1,1,1-trimethylolethane, 1,1,1-trimethylolpropane, glycerol or aniline, or mixtures of the abovementioned compounds. Likewise suitable are polyether polyols with polymer particles dispersed therein, in particular those with styrene/acrylonitrile (SAN) particles or polyurea or polyhydrazinedicarboxamide (PHD) particles. A preferred polyether polyol is polyoxypropylene diol or poloxypropylene triol, or so-called ethylene oxide-capped (EO-capped) polyoxypropylene diol or triol. The latter is mixed polyoxyethylene/polyoxypropylene polyol, which in particular is obtained by using ethylene oxide to further alkoxylate polyoxypropylene diol or triol after the end of a polypropoxylation reaction and therefore finally has a primary hydroxyl group.

A preferred polyether polyol has a degree of unsaturation less than 0.02 mEq/g, in particular less than 0.01 mEq/g.
- Polyester polyols, also called oligoester alcohols, prepared by known methods, in particular polycondensation of hydrocarboxylic acids or lactones, or polycondensation of aliphatic and/or aromatic polycarboxylic acids with diols or polyols. Preferred are polyester diols obtained by a reaction of a diol, e.g. in particular 1,2-ethanediol, diethylene glycol, 1,2-propanediol, dipropylene glycol, 1,4-butanediol, 1,5-pentanediol, 1,6-hexanediol, neopentyl glycol, glycerol, 1,1,1-trimethylolpropane or a mixture of the abovementioned alcohols, with an organic dicarboxylic acid or an anhydride or ester thereof, e.g. in particular succinic acid, glutaric acid, adipic acid, suberic acid, sebacic acid, dodecanedicarboxylic acid, maleic acid, fumaric acid, phthalic acid, isophthalic acid, terephthalic acid or hexahydrophthalic acid or a mixture of the abovementioned acids, or polyester polyols derived from lactones, e.g. in particular ε-caprolactone. Especially preferred are polyester polyols derived from adipic acid or sebacic acid or dodecanedicarboxylic acid and hexanediol or neopentyl glycol.
- Polycarbonate polyols, such as those which may be obtained by a reaction of, for example, the alcohols mentioned above (used to form polyester polyols) with dialkyl carbonates, diaryl carbonates or phosgene.
- Block copolymers with at least two hydroxyl groups and having at least two different blocks having the polyether, polyester and/or polycarbonate structure of the type mentioned above, in particular polyether polyester polyols.
- Polyacrylate polyols and polymethacrylate polyols.
- Fats and oils with polyhydroxyl functionality, e.g. natural fats and oils; or polyols produced by chemical modification of natural fats and oils - so-called oleochemical polyols - e.g. epoxy polyesters or epoxy polyethers obtained by epoxidation of unsaturated oils followed by ring-opening with carboxylic acids or alcohols, or polyols obtained by hydroformylation and hydrogenation of unsaturated oils; or polyols obtained from natural fats and oils by a degradation process such as alcoholysis or ozonolysis followed by chemical bonding, e.g. by ester exchange or dimerization of the degradation product or derivative thereby obtained. Suitable degradation products of natural fats and oils are in particular fatty acids and fatty alcohols and fatty acid esters, in particular methyl esters (FAME), which for example may be derived to hydroxyl fatty acid esters by hydroformylation and hydrogenation action.
- Polyhydrocarbon polyols, also called oligo hydrocarbon alcohols, e.g. polyolefins with polyhydroxyl functionality, polyisobutene, polyisopentadiene; ethylene/propylene, ethylene/butene or ethylene/propylene/diene copolymers with polyhydroxyl functionality, such as those prepared by Kraton Polymers for example; polymers of dienes with polyhydroxyl functionality, in particular of 1,3-butadiene, which in particular may be prepared by anionic polymerization; copolymers of dienes with polyhydroxyl functionality, e.g. of 1 ,3-butadiene or diene mixtures and vinyl monomers such as styrene, acrylonitrile, vinyl chloride, vinyl acetate, vinyl alcohol, isobutene and isopentadiene, e.g. acrylonitrile/butadiene copolymer with polyhydroxyl functionality, which may for example be prepared from an epoxide or amino alcohol and a carboxyl-capped acrylonitrile/butadiene copolymer (commercially available from Emerald Performance Materials under the name Hypro^{®} CTBN or CTBNX or ETBN); and hydrogenated polymers or copolymers of dienes with hydroxyl functionality.

Mixtures of polyols are also particularly suitable.

Preferred are polyether polyols, polyester polyols, polycarbonate polyols, poly(meth)acrylate polyols or polybutadiene polyols.

Especially preferred are polyether polyols, polyester polyols, in particular aliphatic polyester polyols, or polycarbonate polyols, in particular aliphatic polycarbonate polyols.

Most preferred are polyether polyols, in particular polyoxyethylene di- or triol, polyoxypropylene di- or triol or ethylene oxide-capped polyoxypropylene di- or triol.

Preferred are polyols with an average molecular weight of 400 - 20000g/mol, preferably 1000 - 10000g/mol.

Preferred are polyols with an average OH functionality of 1.6 - 3.

Preferred are polyols which are liquid at room temperature.

In the preparation of the polyurethane prepolymer containing an isocyanate group, a bi- or polyfunctional alcohol component may also be used concurrently, in particular 1,2-ethanediol, 1,2-propanediol, 1,3-propanediol, 2-methyl-1,3-propanediol, 1,2-butanediol, 1,3-butanediol, 1,4-butanediol, 1,3-pentanediol, 1,5-pentanediol, 3-methyl-1,5-pentanediol, neopentyl glycol diol, dibromoneopentyl glycol, 1,2-hexanediol, 1,6-hexanediol, 1,7-heptanediol, 1,2-octanediol, 1,8-octanediol, 2-ethyl-1,3-hexanediol, diethylene glycol, triethylene glycol, dipropylene glycol, tripropylene glycol, 1,3- or 1,4-cyclohexane dimethanol, ethoxylated bisphenol A, propoxylated bisphenol A, cyclohexanediol, hydrogenated bisphenol A, dimeric fatty acid alcohols, 1,1,1-trimethylolethane, 1,1,1-trimethylolpropane, glycerol, pentaerythritol, sugar alcohols, e.g. in particular xylitol, sorbitol or mannitol, or sugars, e.g. in particular sucrose, or alkoxylated derivatives of the alcohols mentioned or mixtures of the alcohols mentioned.

Preferably, 1,4-butanediol is used concurrently for applications requiring especially high strength.

The polyurethane prepolymer containing an isocyanate group preferably has an average molecular weight of 1000 - 20000 g/mol, in particular 1500 - 10000 g/mol. It is preferably liquid at room temperature.

Preferably, the polyurethane prepolymer containing an isocyanate group according to the present invention is a polymer of a polyether polyol and a diisocyanate, in particular polymers of the polyether polyols mentioned above and diisocyanates such as TDI and MDI.

The polyurethane prepolymer containing an isocyanate group may be comprised in the polyurethane composition at the rate of 20 - 45 wt%, e.g. 25 - 40 wt% of the total weight of the composition before curing. Advantageously, a polymer base material, i.e. film-forming substance in the polyurethane composition according to the present application is substantially composed of one or more said polyurethane prepolymers containing isocyanate groups; this means that at least 95 wt%, preferably at least 97.5 wt%, 99 wt% or 100 wt% of the base material is composed of one or more said polyurethane prepolymers containing isocyanate groups.

Preferably, in addition to the tung oil and at least one polyurethane prepolymer containing an isocyanate group, the composition additionally comprises one or more other component, which in particular is selected from a catalyst, filler, plasticizer, solvent, photocuring material and light stabilizer, etc.

A suitable catalyst is for example a catalyst used to promote a reaction of the isocyanate group, in particular an organotin(IV) compound, e.g. in particular dibutyltin diacetate, dibutyltin dilaurate, dibutyltin dichloride, dibutyltin bis(acetylacetonate), dimethyltin dilaurate, dioctylti diacetate, dioctyltin dilaurate or dioctyltin bis(acetylacetonate), bismuth(III) or zirconium(IV) complexes, in particular a compound having a ligand selected from alkoxides, carboxylic acid salts, 1,3-diketo acid salts, oxime acid salts, 1,3-keto acid esters and 1,3-ketoamides, or containing a tertiary amino group, e.g. in particular 2,2'-dimorpholinodiethyl ether (DMDEE). If used, the amount of the catalyst is 0 -1 wt%, preferably 0.01 - 0.5 wt% of the total weight of the composition.

Also particularly suitable are combinations of different catalysts.

Suitable fillers are in particular ground or precipitated calcium carbonate, optionally coated with a fatty acid, in particular stearic acid ester, barite, quartz powder, quartz sand, dolomite, wollastonite, kaolin, calcined kaolin, layered silicates (e.g. mica or talcum), zeolites, aluminium hydroxide, magnesium hydroxide, silica, including highly dispersed silica produced by pyrolysis, cement, gypsum, fly ash, industrially produced carbon black, graphite, metal powder such as aluminium, copper, iron, silver or steel, PVC powder or hollow beads. If used, the amount of the filler may be 5 - 60 wt%, preferably 10 - 50 wt% of the total weight of the composition.

Suitable plasticizers are in particular carboxylic acid esters, e.g. phthalic acid esters, in particular diisononyl phthalate (DINP), diisodecyl phthalate (DIDP) or di(2-propylheptyl) phthalate (DPHP), hydrogenated phthalic acid esters, in particular hydrogenated diisononyl phthalate or diisononylcyclohexane-1,2-dicarboxylic acid ester (DINCH), terephthalic acid esters, in particular dioctyl terephthalate, trimellitic acid esters, adipic acid esters, in particular dioctyl adipate, azelaic acid esters, sebacic acid esters, benzoic acid esters, ethylene glycol ethers, ethylene glycol esters, organophosphates or sulfonic acid esters, polybutene, polyisobutene or plasticizers derived from natural fats or oils, in particular epoxidized soybean or linseed oil. If used, the amount of the plasticizer is 5 - 40 wt%, preferably 10 - 30 wt% of the total weight of the composition.

When irradiated by light, photocuring materials readily undergo chemical changes in their molecular structure within a very short time, and these are accompanied by physical changes such as hardening. Compounds of this type include organic monomers, organic oligomers, resins, and other compositions containing these substances. Compounds of this type are generally unsaturated acrylic compounds, poly(vinyl cinnamates), and compounds containing azides. If used, the amount of the photocuring material may be 0.2 - 3 wt%, preferably 0.4 -1.5 wt% of the total weight of the composition.

Suitable unsaturated acrylic compounds include acrylic acid and methacrylic acid monomers having one or more unsaturated group, oligomers thereof and mixtures thereof. Demonstrative examples of oligomers having a molecular weight of less than 10,000 and acting as monomers include propylene (or butylene or ethylene) glycol di(meth)acrylate, neopentyl glycol di(meth)acrylate, and 1,4-butyldimethacrylate.

Poly(vinyl cinnamates) are a type of photosensitive resin with a cinnamoyl group as a photosensitive group, and include poly(vinyl cinnamates) prepared by using cinnamic acid to esterify polyvinyl alcohol, and many other poly(vinyl cinnamate) derivatives.

Compounds containing azides are well known photosensitive resins having an azide group as a photosensitive group.

Light stabilizers are in particular sterically hindered amine light stabilizers, including UV absorbers (which absorb light energy from sunlight and fluorescent lamps for example, and convert it to harmless thermal energy), and quenchers which eliminate active centres caused by light energy. In the case of resins that are easily damaged by light, a thermal stabilizer and an antioxidant may be used in combination with the light stabilizer, so as to significantly improve their lightfastness and weather resistance. If used, the amount of the light stabilizer may be 0.05 - 3 wt%, preferably 0.1 - 1.5 wt% of the total weight of the composition.

Most sterically hindered amine light stabilizers of this type have already been commercialized, including for example ADEKASTAB LA-52, LA-57, LA-62, LA-67, LA-63, LA-68, LA-77, LA-82 and LA-87 (produced by ASAHI DENKA KOGYO K.K.); di(2,2,6,6-tetramethyl-4-piperidinyl) sebacate; di(1,2,2,6,6-pentamethyl-4-piperidinyl) sebacate, 1-[2-(3,5-di-tert-butyl-4-hydroxyphenyl)-propionyloxy]ethyl]-4-[3-(3,5-di-tert-butyl-4-hydroxyphenyl)propionyloxy]- 2,2,6,6-tetramethylpiperidinylsuccinate, dimethyl-1-(2-hydroxyethyl)-4-hydroxyl-2,2,6,6-tetramethylpiperidine condensation polymer, poly[[6-1-(1,1,3,3-tetramethylbutyl)imino-1,3,5-triazine-2,4-diyl][2,2,6,6-tetramethyl-4-piperidinyl]imino]hexamethylene[(2,2,6,6-tetramethyl-4-piperidinyl)imino]], di(1,2,2,6,6-pentamethyl-4-piperidinyl)2-(3,5-di-tert-butyl-4-hydroxybenzyl)-2-n-butyl malonate, etc.

When the composition of the present invention comprises a photocuring material or light stabilizer as described above, especially when a photocuring material or light stabilizer is used in the amount mentioned above, the anti-chalking effect (in particular when the carbon black content is high) can be further improved significantly, without weakening the mechanical performance of the product after curing.

The composition may comprise other additives generally used in polyurethane compositions. More especially, the following aids and additives may be present:
- inorganic or organic pigments, in particular titanium dioxide, chromium oxide or iron oxide;
- fibres, in particular glass fibres, carbon fibres, metal fibres, ceramic fibres, plastic fibres (e.g. polyamide fibres or polyethylene fibres) or natural fibres (e.g. wool, cellulose, hemp or sisal);
- dyes;
- dessicants, in particular molecular sieve powders, calcium oxide, highly reactive isocyanates, e.g. p-toluenesulfonyl isocyanate, monomeric diisocynates or orthoformic acid esters;
- tackifiers, in particular organic alkoxysilanes, in particular epoxysilanes, e.g. in particular 3-glycidoxypropyltrimethoxysilane or 3-glycidoxypropyltriethoxysilane, (meth)acryloyl silane, anhydride silanes, carbamic acid silane, alkyl silanes or iminosilane or oligomer forms of these silanes, or titanic acid esters;
- potential curing agents or crosslinking agents;
- other catalysts which promote a reaction of the isocyanate group, in particular salts, soaps or complexes of tin, zinc, bismuth, iron, aluminium, molybdenum, molybdenum dioxide, titanium, zirconium or potassium, in particular tin(II) 2-ethylhexanoate, tin(II) neodecanoate, zinc(II) acetate, zinc(II) 2-ethylhexanoate, zinc(II) laurate, zinc(ll) acetylacetonate, aluminium lactate, aluminium oleate, titanium diisopropoxide-bis(ethyl acetoacetate) or potassium acetate; compounds containing a tert-amino group, in particular N-ethyldiisopropylamine, N,N,N',N'-tetramethylalkylenediamine, pentamethylalkylenetriamine and higher homologues thereof, bis(N,N-diethylaminoethyl)oxalate, tris(3-dimethylaminopropyl)amine, 1,4-diazabicyclo[2.2.2]octane (DABCO), 1,8-diazabicyclo[5.4.0]undec-7-ene (DBU), 1,5-diazabicyclo[4.3.0]non-5-ene (DBN), N-alkyl morpholine, N,N'-dimethylpiperazine; aromatic nitrogen-containing compounds, e.g. 4-dimethylaminopyridine, N-methylimidazole, N-vinylimidazole or 1,2-dimethylimidazole; organic ammonium compounds, e.g. benzyltrimethylammonium hydroxide or alkoxylated tertiary amines; so-called "delayed action" catalysts, which are known variants of metal or amine catalysts;
- rheology modifiers, in particular thickeners, in particular layered silicates, e.g. bentonite, polyamide, polyamide wax, polyurethane, urea compounds, fumed silica, cellulose ether or hydrophobic modified polyoxyethylene;
- natural resins, fats or oils;
- silane coupling agents;
- non-reactive polymers, in particular homo- or copolymers of unsaturated monomers, the monomers in particular being selected from ethylene, propylene, butene, isobutene, isopentadiene, vinyl acetate or alkyl (meth)acrylate, in particular polyethylene (PE), polypropylene (PP), polyisobutene, ethylene/vinyl acetate copolymer (EVA) or atactic poly α-olfin (APAO);
- flame retardant substances, in particular aluminium hydroxide or magnesium hydroxide fillers which have already been mentioned, also in particular organophosphates, e.g. in particular triethyl phosphate, tricresyl phosphate, triphenyl phosphate, diphenylcresyl phosphate, isodecyl diphenyl phosphate, tris(1,3-dichloro-2-propyl)phosphate, tris(2-chloroethyl)phosphate, tris(2-ethylhexyl)phosphate, tris(chloroisopropyl)phosphate, tris(chloropropyl)phosphate, isopropylated triphenyl phosphate, mono-, bis- or tris(isopropylphenyl) phosphates with different degrees of isopropylation, resorcinol bis(diphenyl phosphate), bisphenol A-bis(diphenyl phosphate) or ammonium polyphosphate;
- additives, in particular wetting agents, levelling agents, defoaming agents, degassing agents, anti-oxidation, -heat, -light or -UV stabilizers, or biocides;
or other substances generally used in moisture-curing compositions.

It is recommended that certain substances be chemically or physically dried before being mixed into the composition.

In the present application, the polyurethane prepolymer is advantageously a moisture-curable polyurethane composition which is crosslinked and cured by a reaction of isocyanate groups with hydroxyl groups and/or moisture or water.

The polyurethane composition is in particular produced by mixing the various components together under moisture-free conditions, and is stored in a damp-proof container at ambient temperature. Suitable damp-proof containers are in particular formed of optionally coated metal and/or plastic, and in particular are drums, cases, buckets, tubes, cans, bags, pouches, hose bags, boxes or pipes.

The mixing process is not specially restricted and is known to those skilled in the art, and various suitable mixing apparatuses may be used to mix the components. Tung oil may be added at any time in the mixing process. For example, tung oil and other additives may be added to the polyurethane prepolymer by stirring/mixing at room temperature, after first producing the polyurethane prepolymer. Advantageously, the ingress of moisture in air is avoided in the mixing process. This may be achieved by applying a vacuum or by nitrogen protection.

The polyurethane composition is preferably in the form of a single-component composition.

A composition referred to as a "single-component" composition is a composition in which all of the constituents of the composition are in the same container and which is itself storage-stable. It is storage-stable in suitable packaging and storage, generally for a few months up to as long as a year or a longer time.

The curing process begins when the composition is applied. This produces a cured composition. A single-component composition is applied in its original form, and curing then begins under the influence of moisture or water. The moisture required for curing of the single-component composition preferably enters the composition by diffusion from the air (atmospheric moisture). In this process, a solid layer ("skin") of the cured composition forms on a surface of the composition in contact with the air. Curing continues in the direction of diffusion from the outside to the inside, and the skin becomes thicker and thicker, finally covering the entirety of the applied composition. Moisture may also enter the composition additionally or completely from one or more substrate to which the composition has already been applied, and/or may come from a promoter component, which is mixed into the composition when applied or comes into contact therewith after application, e.g. by spreading or spray-coating.

The composition is preferably applied at ambient temperature, in particular within the range of about 0 - 50°C, preferably within the range of 5 - 40°C.

The composition preferably cures at ambient temperature.

The composition is preferably an adhesive or sealant or coating.

The composition is particularly suitable for use as an adhesive and/or sealant in bonding and sealing applications, in particular in the construction and manufacturing industries, preferably the manufacture of vehicles, in particular for bonding of parquet flooring, bonding of installed components, sealing of cavities, assembly, bonding of modules, bonding of vehicle bodies, bonding of window glass, or sealing of connectors. Elastic bonding in vehicle construction is, for example, bonding of components (e.g. plastic covers, decorative strips, flanges, bumpers, the driver's cabin or other mountable components) onto the painted body of a motor vehicle, or bonding of window glass into the body, wherein the vehicle is in particular a car, truck, bus, railway vehicle or ship.

Preferably, the composition of the present invention is used for elastic sealing of various connectors, seams or cavities, in particular component bonding, cavity sealing, body bonding and window glass bonding, etc., in car manufacture.

Thus, the present invention also relates to those products which are obtained by the bonding or sealing applications mentioned above.

### Examples

Examples are described below, and explain the present invention in more detail. Of course, the present invention is not limited to the described Examples.

### 1. Description of main starting materials

| Name | Description |
|---|---|
| Prepolymer P1 | NCO-capped polyurethane prepolymer synthesized from MDI and polyether polyol |
| Prepolymer P2 | NCO-capped polyurethane prepolymer synthesized from MDI and polyether polyol |
| Prepolymer P3 | NCO-capped polyurethane prepolymer synthesized from IPDI and polyether polyol |
| Additive TI | p-Toluenesulfonyl isocyanate (Borchers) |
| Jayflex^{®} DIDP | Diisodecyl phthalate (ExxonMobil) |
| Xylene | Solvent, Aladdin Reagents |
| | Calcium carbonate (Omya) |
| | Carbon black (Cabot) |
| | Sterically hindered amine light stabilizer (Basf) |
| | Unsaturated acrylic photocuring compound (Toagosei) |
| Tung oil | Jinxing Tung Oil Factory, Dongchangfu District, Liaocheng City |
| Linseed oil | Shaoguan Derui Chemical Industry Co., Ltd. |
| | Dibutyltin dilaurate (Evonik) |

### 2. Preparation of polyurethane prepolymers

### Prepolymer P1:

2793 g of polyether triol (EXCENOL@ 4030, Asahi), 1787 g of polyether diol (Acclaim^{®} 4200, Covestro), 598 g of diisodecyl phthalate (Jayflex^{®} DIDP) and 820 g of MDI (Desmodur^{®} 44 MC, Covestro) were added to a reaction apparatus, stirred and heated to 80°C under nitrogen protection and reacted until the reaction end point. Polyurethane prepolymer P1 capped by an isocyanate group was finally obtained, with an isocyanate group content of about 2.4%.

### Prepolymer P2:

4051 g of polyether triol (VORANOL^{®} CP 4755, Dow Chemicals), 1787 g of polyether diol (Acclaim^{®} 4755, Covestro), 1172 g of diisodecyl phthalate (Jayflex^{®} DIDP) and 675 g of MDI (Desmodur^{®} 44 MC, Covestro) were added to a reaction apparatus, stirred and heated to 80°C under nitrogen protection and reacted until the reaction end point. Polyurethane prepolymer P2 capped by an isocyanate group was finally obtained, with an isocyanate group content of about 2%.

### Prepolymer P3:

1632 g of polyether diol (Acclaim^{®} 4200, Covestro), 4410 g of polyether triol (VORANOL^{®} CP 4755, Dow Chemicals) and 800 g of IPDI (Desmodur^{®} I, Covestro) were added to a reaction apparatus, stirred and heated to 80°C under nitrogen protection and reacted until the reaction end point. A polyurethane prepolymer capped by an isocyanate group was finally obtained; polyurethane prepolymer P3 had an isocyanate group content of about 2.1%.

### 3. General formulation process of polyurethane composition

The components in the specified parts by weight listed in Table 1 were added in sequence to a two-shaft kneader at room temperature, mixed in a vacuum state, and processed to form a uniform paste. This was then immediately packed into an internally coated aluminium tube, which was then sealed hermetically. Examples E0 to E7 were thereby produced.

Various properties of the compositions thus produced were then tested as described below.

### 4. Description of performance testing

Tensile strength and elongation at break were tested according to GBIT 528-2009. The test rate was 200 mm/min, the sample thickness was about 2 mm, and the sample was cured for 7 days at 23°C in 50% relative humidity.

Shore A hardness was tested according to GBIT 531.1-2008. The sample thickness was about 6 mm, and the sample was cured for 7 days at 23°C in 50% relative humidity.

The surface drying time was tested according to GBIT 13477.5-2002. The results for surface drying time were accurate to 2 minutes.

Assessment of the degree of chalking was performed according to the adhesive tape test described in GB/T 1766-2008. The sample thickness was about 2 mm, and the sample was cured for 7 days at 23°C in 50% relative humidity.

**Table 1: Components of composition in each Example, and comparison of properties thereof**

| Components | E0 | E1 | E2 | E3 | E4 | E5 | E6 | E7 |
|---|---|---|---|---|---|---|---|---|
| Prepolymer P1 | 11 | 11 | 11 | 11 | 11 | 11 | 11 | 11 |
| Prepolymer P2 | 15 | 15 | 15 | 15 | 15 | 15 | 15 | 15 |
| Prepolymer P3 | 4 | 4 | 4 | 4 | 4 | 4 | 4 | 4 |
| | 0.4 | 0.4 | 0.4 | 0.4 | 0.4 | 0.4 | 0.4 | 0.4 |
| | 18.18 | 17.68 | 17.18 | 15.18 | 17.18 | 17.68 | 17.18 | 17.18 |
| Xylene | 3.3 | 3.3 | 3.3 | 3.3 | 3.3 | 3.3 | 3.3 | 3.3 |
| | 31 | 31 | 31 | 31 | 31 | 31 | 38 | 46 |
| | 17 | 17 | 17 | 17 | 17 | 17 | 10 | 2 |
| | 0.1 | 0.1 | 0.1 | 0.1 | 0.1 | 0.1 | 0.1 | 0.1 |
| | | | | | | 0.5 | | |
| Tung oil | | 0.5 | 1 | 3 | | | 1 | 1 |
| Linseed oil | | | | | 1 | | | |
| | 0.02 | 0.02 | 0.02 | 0.02 | 0.02 | 0.02 | 0.02 | 0.02 |
| Total | 100 | 100 | 100 | 100 | 100 | 100 | 100 | 100 |

| Performance tests | | | | | | | | |
|---|---|---|---|---|---|---|---|---|
| Surface drying time [min] | 24 | 24 | 26 | 50 | 26 | 28 | 28 | 52 |
| Tensile strength [MPa] | 6.07 | 5.81 | 5.72 | 5.07 | 5.32 | 5.67 | 4.47 | 1.85 |
| Elongation at break [%] | 564 | 571 | 564 | 500 | 620 | 585 | 526 | 412 |
| Shore A hardness | 68 | 68 | 67 | 63 | 64 | 66 | 57 | 49 |
| Chalking (QUV) | | | | | | | | |
| 250 hrs | 2.5 | 4 | 0.5 | 0.5 | 3 | 4 | 1 | 2 |
| | 4.5 | 4.5 | 1 | 1 | 4 | 4.5 | 1.5 | 2.5 |
| 500 hrs | 5 | 5 | 1.5 | 1 | 2.5 | 5 | 2 | 3 |
| 1000 hrs | | | | | | | | |
| Chalking (outdoors) | | | | | | | | |
| | 5 | 5 | 1 | 1 | 3 | 5 | 1.5 | 1 |
| 3 months | | | | | | | | |

## Claims

1. A polyurethane composition, comprising:
- at least one polyurethane prepolymer containing an isocyanate group;
- tung oil at the rate of 0.7 - 2.5 wt%, preferably 0.8 - 2.0 wt% of the total weight of the composition; and
- carbon black.

2. The polyurethane composition as claimed in claim 1, **characterized in that** the polyurethane prepolymer containing an isocyanate group is a polymer of a polyether polyol with a diisocyanate, in particular a polymer of a polyoxyalkylene diol and/or a polyoxyalkylene triol with a diisocyanate, especially TDI and/or MDI.

3. The polyurethane composition as claimed in claim 1 or 2, **characterized in that** the polyurethane prepolymer containing an isocyanate group is comprised in the polyurethane composition at the rate of 20 - 45 wt%, preferably 25 - 40 wt% of the total weight of the composition before curing.

4. The polyurethane composition as claimed in any one of the preceding claims, **characterized in that** in addition to tung oil, the polyurethane composition comprises less than 0.1 wt%, especially less than 0.05 wt% or preferably less than 0.005 wt%, or more preferably does not comprise, another drying oil.

5. The polyurethane composition as claimed in any one of the preceding claims, **characterized in that** the polyurethane composition contains carbon black at the rate of at least 9 wt%, preferably at least 15 wt% of the total weight of the polyurethane composition.

6. The polyurethane composition as claimed in any one of the preceding claims, **characterized in that** the polyurethane composition contains a photocuring material and/or a light stabilizer.

7. The polyurethane composition as claimed in claim 6, **characterized in that** the photocuring material is selected from unsaturated acrylic compounds, poly(vinyl cinnamates), and compounds containing azides, preferably unsaturated acrylic compounds.

8. The polyurethane composition as claimed in claim 6, **characterized in that** the light stabilizer is a sterically hindered amine light stabilizer.

9. A method for improving the chalking resistance of a polyurethane composition coating layer, the method comprising adding tung oil to a polyurethane composition containing carbon black and at least one polyurethane prepolymer containing an isocyanate group, before curing, at the rate of 0.7 - 2.5 wt%, preferably 0.8 - 2.0 wt% of the total weight of the polyurethane composition.

10. The method as claimed in claim 9, **characterized in that** the polyurethane composition comprises carbon black at the rate of at least 9 wt%, preferably at least 15 wt% of the total weight of the polyurethane composition.

11. The method as claimed in claim 9 or 10, **characterized in that** a photocuring material and/or a light stabilizer is added to the polyurethane composition.

12. The method as claimed in claim 11, **characterized in that** the photocuring material is selected from unsaturated acrylic compounds, poly(vinyl cinnamates), and compounds containing azides, preferably unsaturated acrylic compounds, and/or the light stabilizer is a sterically hindered amine light stabilizer.

13. The use of the polyurethane composition as claimed in any one of claims 1 - 8 as an adhesive and/or a sealant for bonding and sealing, in particular in construction and manufacturing industries, preferably in the manufacture of vehicles.
